# EUROPEAN PATENT APPLICATION

(11) **EP 4 800 222 A1**
(43) Date of publication of application: **02.09.2026**
(21) Application number: 26161204.8
(22) Date of filing: 27.02.2026
(51) Int. Cl.: F01D 5/18

(54) **GAS TURBINE ENGINES WITH BLADE ASSEMBLIES HAVING COOLING HOLES**

(30) Priority: 28.02.2025 US 202563765216 P
(71) Applicant: General Electric Company, Cincinnati, Ohio 45215 (US)
(72) Inventor: NGUYEN, Mary, West Chester, 45069 (US); GOOD, Matthew, West Chester, 45069 (US); NOETH, Zachary, West Chester, 45069 (US); FISHBACK, Kelli, West Chester, 45069 (US); MYERS, Marie, West Chester, 45069 (US)
(74) Representative: Openshaw & Co.

(57) **Abstract**

Blade assemblies (300) for gas turbine engines (100) are described herein. The blade assembly (300) includes a shank (302), a platform (304), and an airfoil (306). The airfoil (306) has a plurality of cooling holes (334). Cooling fluid flows through internal conduits (700a-700e) of the airfoil (306) and is vented by the cooling holes (334). The exterior surface (324) of the airfoil (306) is divided into zones with certain metering areas defined by the cooling holes (334).

## Description

### TECHNICAL FIELD

The present subject matter relates generally to gas turbine engines, and more specifically to gas turbine engines with blade assemblies having cooling holes.

### BACKGROUND

A gas turbine engine typically includes a turbomachine, with a fan in some implementations. The turbomachine generally includes a compressor, combustor, and turbine in serial flow arrangement. The compressor compresses air that is channeled to the combustor where it is mixed with fuel. The mixture is then ignited to generate hot combustion gases. The combustion gases are channeled to the turbine, which extracts energy from the combustion gases for powering the compressor and fan, if used, as well as for producing useful work to propel an aircraft in flight or to power a load, such as an electrical generator.

During operation of the gas turbine engine, various systems generate a relatively large amount of heat and stress. For example, a substantial amount of heat or stress can be generated during operation of the thrust generating systems, lubrication systems, electric motors and/or generators, hydraulic systems or other systems. A design that mitigates heat loads and/or stresses on an engine component is advantageous.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a gas turbine engine, in accordance with an exemplary embodiment of the present disclosure.
FIG. 2 is a perspective view of a turbine disk and a blade assembly that can be implemented in the gas turbine engine of FIG. 1, in accordance with an exemplary embodiment of the present disclosure.
FIG. 3A is a perspective view of a pressure side of a blade assembly for use in the gas turbine engine of FIG. 1, in accordance with an exemplary embodiment of the present disclosure.
FIG. 3B is a perspective view of a suction side of the blade assembly of FIG. 3A, in accordance with an exemplary embodiment of the present disclosure.
FIG. 4 is a schematic diagram used to calculate a stator rotor seal radius of the blade assembly of FIGS. 3A and 3B, in accordance with an exemplary embodiment of the present disclosure.
FIG. 5 is a side view of the blade assembly of FIGS. 3A and 3B showing multiple planes that divide the airfoil into vertical zones, in accordance with an exemplary embodiment of the present disclosure.
FIG. 6A is a cross-sectional view of the airfoil taken along a first plane shown in FIG. 5 and showing points used to divide the airfoil into horizontal zones, in accordance with an exemplary embodiment of the present disclosure.
FIG. 6B is a cross-sectional view of the airfoil taken along a second plane shown in FIG. 5 and showing points used to divide the airfoil into horizontal zones, in accordance with an exemplary embodiment of the present disclosure.
FIG. 7 is a cross-sectional view of the airfoil of the blade assembly of FIGS. 3A and 3B showing a plurality of internal cooling conduits in the airfoil.
FIG. 8A is a side view of an example cooling hole.
FIG. 8B is a cross-sectional view of the example cooling hole of FIG. 8A taken along line 8B-8B.
FIG. 9A is a side view of an example cooling hole.
FIG. 9B is a cross-sectional view of the example cooling hole of FIG. 9A taken along line 9B-9B.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

Aspects of the disclosure generally relate to a blade assembly having cooling holes located along the exterior surface. Specifically, the blade assembly includes an airfoil with a plurality of internal cooling conduits and a shank with a plurality of inlet passages that direct a flow of cooling fluid (e.g., air) into the internal cooling conduits to help reduce the temperature of the blade assembly. The airfoil also includes cooling holes fluidly coupled to the plurality of cooling conduits that vent or exhaust the cooling fluid to the exterior surface of the airfoil.

The blade assembly may be a blade assembly in a turbine section of a gas turbine engine. For example, the blade assembly may be a stage one blade assembly of a high pressure turbine, which typically experiences the highest thermal and mechanical stresses.

The shank may be used to attach the blade assembly to a turbine disk. In some implementations the shank is formed as a dovetail received in the turbine disk. A platform of the blade assembly together with other circumferentially arranged platforms and seals of other blade assemblies define a substantially continuous annular ring that limits (e.g., prevents, reduces) hot gas leakage from the flow path into the turbine disk cavity. The airfoil extends radially from the platform, away from the turbine disk while the shank extends radially from the platform, toward the turbine disk.

High engine temperatures and operational forces impart relatively large thermal and mechanical stresses on the blade assemblies. In addition, the cooling conduits, the inlet passages, and the cooling holes in the blade assembly create stress concentrations. For example, the cooling holes create through-wall voids to support fluid transfer, but such through-wall voids can lead to stress concentrations in the wall of the blade assembly. Relatively large stresses can contribute to an unexpected or premature part replacement. Therefore, there is a need for a blade assembly with greater durability to increase time on wing.

Connection references (e.g., attached, coupled, connected, and joined) are to be construed broadly and can include intermediate structural elements between a collection of elements and relative movement between elements unless otherwise indicated. As such, connection references do not necessarily infer those two elements are directly connected and in fixed relation to one another. The exemplary drawings are for purposes of illustration only and the dimensions, positions, order and relative sizes reflected in the drawings attached hereto can vary.

As used herein, a "stage" of either a compressor or a turbine of a gas turbine engine is a set of blade assemblies and an adjacent set of vane assemblies. Both sets of the blade assemblies and the vane assemblies are circumferentially arranged about an engine centerline. A pair of circumferentially-adjacent vanes assemblies are referred to as a nozzle. The blade assemblies rotate relative to the engine centerline and, in one example, are mounted to a rotating structure, such as a disk, to affect the rotation.

As used herein, the word "exemplary" means "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", "third", and "fourth" can be used interchangeably to distinguish one component from another and are not intended to signify location or importance of the individual components.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. For example, the approximating language may refer to being within a 10 percent margin.

As used herein, the terms "forward" and "aft" refer to relative positions within a gas turbine engine or vehicle and are based on a normal operational attitude of the gas turbine engine or vehicle. More particularly, forward and aft are used herein with reference to a direction of travel and a direction of propulsive thrust of the gas turbine engine or vehicle.

As used herein, the terms "upstream" and "downstream" refer to the relative direction with respect to fluid flow in a fluid pathway. For example, "upstream" refers to the direction from which the fluid flows, and "downstream" refers to the direction to which the fluid flows.

As used herein, the term "fluid" refers to a gas or a liquid and "fluidly coupled" means a fluid can flow between the coupled regions.

As used herein, forms "a", "an", and "the" include plural references unless the context clearly dictates otherwise.

As used herein, a radial direction (denoted "R2") is a direction that is perpendicular to a base plane on a shank of a blade assembly.

As used herein, an axial direction (denoted "A2") is a direction that is perpendicular to a shank leading edge plane on the shank of the blade assembly.

As used herein, a tangential direction (denoted "T") is a direction that is perpendicular to the radial direction R2 and the axial direction A2.

The term redline exhaust gas temperature (referred to herein as "redline EGT") refers to a maximum permitted takeoff temperature documented in a Federal Aviation Administration ("FAA")-type certificate data sheet. For example, in certain exemplary embodiments, the term redline EGT may refer to a maximum permitted takeoff temperature of an airflow after a first stage stator downstream of an HP turbine of an engine that the engine is rated to withstand. The term redline EGT is sometimes also referred to as an indicated turbine exhaust gas temperature or indicated turbine temperature.

The term redline core speed (referred to herein as "redline CS") refers to a maximum rotational speed of a gas turbine engine permitted at takeoff as documented in the FAA-type certificate data sheet. For example, the redline core speed CS is the rate at which the drive shaft for the gas turbine engine rotates, which defines the rotational speed of the particular blade assembly within the gas turbine engine.

All measurements referred to herein are taken of the blade assembly prior to use or as a cold component.

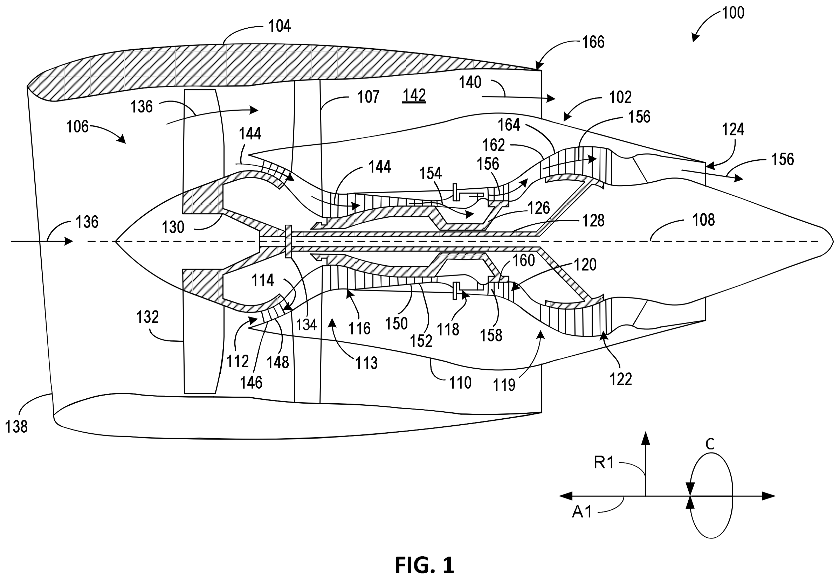

Referring now to the drawings, FIG. 1 is a schematic cross-sectional view of an example gas turbine engine 100 that can incorporate various examples disclosed herein. The example gas turbine engine 100 can be implemented on an aircraft and can therefore referred to as an aircraft engine. The example gas turbine engine 100 of FIG. 1 is configured as a turbofan-type of engine. However, while the example blade assemblies disclosed herein are described in connection with a turbofan-type of engine, the principles of the present disclosure are also applicable to other types or configurations of engines, such as turbojet engines, turboprop engines, engines without a nacelle, such as unducted fan (UDF) engines, etc. Further, the example principles disclosed herein can be implemented on other types of engines, such as non-aircraft engines (e.g., power generation engines).

As shown in FIG. 1, the gas turbine engine 100 includes a turbomachine 102 (sometimes referred to as an 4e), an outer bypass duct 104 (sometimes referred to as a nacelle or fan duct), and a fan section 106. The turbomachine 102 and the fan section 106 are disposed at least partially in the outer bypass duct 104. The turbomachine 102 is disposed downstream from the fan section 106 and drives the fan section 106 to produce forward thrust. The turbomachine 102 is coupled to and supports the outer bypass duct 104 via a plurality of radially extending struts 107.

As shown in FIG. 1, the gas turbine engine 100 and/or the turbomachine 102 define a longitudinal or axial centerline axis 108 extending therethrough for reference. FIG. 1 also includes an annotated directional diagram with reference to an axial direction A1, a radial direction R1, and a circumferential direction C. In general, as used herein, the axial direction A1 is a direction that extends generally parallel to the centerline axis 108, the radial direction R1 is a direction that extends orthogonally outward from or inward toward the centerline axis 108, and the circumferential direction C is a direction that extends concentrically around the centerline axis 108. Further, as used herein, the term "forward" refers to a direction along the centerline axis 108 in the direction of movement of the gas turbine engine 100, such as to the left in FIG. 1, while the term "rearward" refers to a direction along the centerline axis 108 in the opposite direction, such as to the right in FIG. 1.

The turbomachine 102 includes a substantially tubular casing 110 (which may also be referred to as a mid-casing) that defines an annular inlet 112. The casing 110 of the turbomachine 102 can be formed from a single casing or multiple casings. The casing 110 encloses, in serial flow relationship, a compressor section 113 having a booster or low pressure compressor 114 ("LP compressor 114") and a high pressure compressor 116 ("HP compressor 116"), a combustion section 118 (which may also be referred to as the combustor 118), a turbine section 119 having a high pressure turbine 120 ("HP turbine 120") and a low pressure turbine 122 ("LP turbine 122"), and an exhaust section 124.

The turbomachine 102 includes a high pressure shaft 126 ("HP shaft 126") that drivingly couples the HP turbine 120 and the HP compressor 116. The turbomachine 102 also includes a low pressure shaft 128 ("LP shaft 128") that drivingly couples the LP turbine 122 and the LP compressor 114. The LP shaft 128 also couples to a fan shaft 130.

The fan section 106 includes a plurality of fan blades 132 that are coupled to and extend radially outward from the fan shaft 130. In some examples, the LP shaft 128 may couple directly to the fan shaft 130 (e.g., a direct-drive configuration). In alternative configurations, the LP shaft 128 may couple to the fan shaft 130 via a reduction gear 134 (i.e., an indirect-drive or geared-drive configuration). While in this example the turbomachine 102 includes two compressors and two turbines, in other examples, the turbomachine 102 may only include one compressor and one turbine. Further, in other examples, the turbomachine 102 can include more than two compressors and turbines. In such examples, the turbomachine 102 may include more than two drive shafts or spools.

As illustrated in FIG. 1, during operation of the gas turbine engine 100, air 136 enters an inlet portion 138 of the gas turbine engine 100. The air 136 is accelerated by the fan blades 132 (and, thus, is sometimes considered a low pressure compressor). A first portion 140 of the air 136 flows into a bypass airflow passage 142, while a second portion 144 of the air 136 flows into the inlet 112 of the turbomachine 102 (and, thus, into the LP compressor 114). One or more sequential stages of LP compressor stator vanes 146 and LP compressor rotor blades 148 coupled to the LP shaft 128 progressively compress the second portion 144 of the air 136 flowing through the LP compressor 114 en route to the HP compressor 116. Next, one or more sequential stages of HP compressor stator vanes 150 and HP compressor rotor blades 152 coupled to the HP shaft 126 further compress the second portion 144 of the air 136 flowing through the HP compressor 116. This provides compressed air 154 to the combustion section 118 where it mixes with fuel and burns to provide combustion gases 156.

The combustion gases 156 flow through the HP turbine 120 where one or more sequential stages of HP turbine stator vanes 158 and HP turbine rotor blades 160 coupled to the HP shaft 126 extract a first portion of kinetic and/or thermal energy. This energy extraction supports operation of the HP compressor 116. The combustion gases 156 then flow through the LP turbine 122 where one or more sequential stages of LP turbine stator vanes 162 and LP turbine rotor blades 164 coupled to the LP shaft 128 extract a second portion of thermal and/or kinetic energy therefrom. This energy extraction causes the LP shaft 128 to rotate, which supports operation of the LP compressor 114 and/or rotation of the fan shaft 130. The combustion gases 156 then exit the turbomachine 102 through the exhaust section 124 thereof. The first portion 140 of the air 136 exiting an exhaust nozzle 166 (e.g., a converging/diverging nozzle) of the outer bypass duct 104 and the combustion gases 156 exiting the exhaust section 124 produce propulsive thrust. Each of the HP and LP compressors 114, 116 of the compressor section 113 includes a plurality of axially spaced stages. Each stage includes a set of circumferentially-spaced rotating blade assemblies and a set of circumferentially-spaced stationary vane assemblies. The compressor blade assemblies for a stage are mounted to a disk. The disks of the LP compressor 114 are coupled to the LP shaft 128, and the disks of the HP compressor 116 are coupled to the HP shaft 126. Each set of blade assemblies for a given stage can have its own disk. In one implementation, the vane assemblies of the compressor section 113 are mounted to a casing which extends circumferentially about the turbomachine 102.

Similar to the compressor section 113, each of the HP and LP turbines 120, 122 of the turbine section 119 includes a plurality of axially spaced stages, with each stage having a set of circumferentially-spaced, rotating blade assemblies and a set of circumferentially-spaced, stationary vane assemblies. In one configuration, the turbine blade assemblies for a stage are mounted to a disk, which is mounted to one of the HP or LP drive shafts 126, 128. Each set of blade assemblies for a given stage can have its own disk. In one implementation, the vane assemblies of the turbine section 119 are mounted to the casing in a circumferential manner.

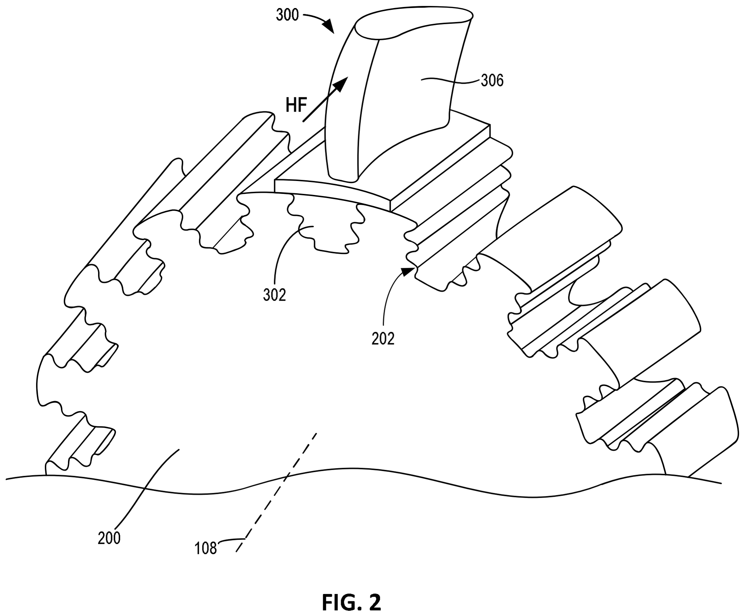

FIG. 2 shows an example turbine disk 200 to which a plurality of blade assemblies 300 (one of which is shown in FIG. 2) can be coupled. The blade assemblies 300 correspond to the rotor blades 160, 164 in FIG. 1. The turbine disk 200 is coupled to one of the engine shafts, such as the HP shaft 126 (FIG. 1). The HP turbine 120 (FIG. 1) can include any number of stages of blade assemblies, where each stage includes a turbine disk coupled to the HP shaft 126 and a plurality of blade assemblies coupled to the corresponding disk. Similarly, the LP turbine 122 (FIG. 1) can include multiple stages of blade assemblies that coupled to corresponding disks that are coupled to the LP shaft 128. Between each disk of rotor blades, the turbine section 119 includes stationary vane assemblies that are mounted to a stator ring. A nozzle is defined by the space between circumferentially-adjacent pairs of vane assemblies.

As shown in FIG. 2, the turbine disk 200 includes a plurality of slots 202 (one of which is reference in FIG. 2) around a periphery or circumference of the turbine disk 200. Each of the blade assemblies 300 has a shank 302 that is inserted into one of the slots 202. The slots 202 and the shank 302 have overhanging portions, e.g., in a dovetail shape, that secure the blade assemblies 300 to the turbine disk 200. Each of the blade assemblies 300 has an airfoil 306 that extends radially outward.

During operation of the gas turbine engine 100, a flow of hot gas or heated fluid flow (denoted "HF") exits the combustor 118 (FIG. 1) and enters the turbine section 119 (FIG. 1). The heated fluid flow HF is directed through the nozzles and impinges on the blade assemblies 300, which rotates the blade assemblies 300 and therefore the disks 200 circumferentially around the centerline axis 108 and cause rotation of the HP and LP shafts 126, 128 (FIG. 1). In the exemplary embodiments disclosed herein, the turbomachine 102 of the gas turbine engine 100 is configured to generate a redline exhaust gas temperature (EGT) in a range of 988 degrees Celsius (°C) to 1120°C. Further, the turbomachine 102 is configured to drive the HP shaft 126 at a redline core speed (CS) of 306 to 353 Hertz (Hz).

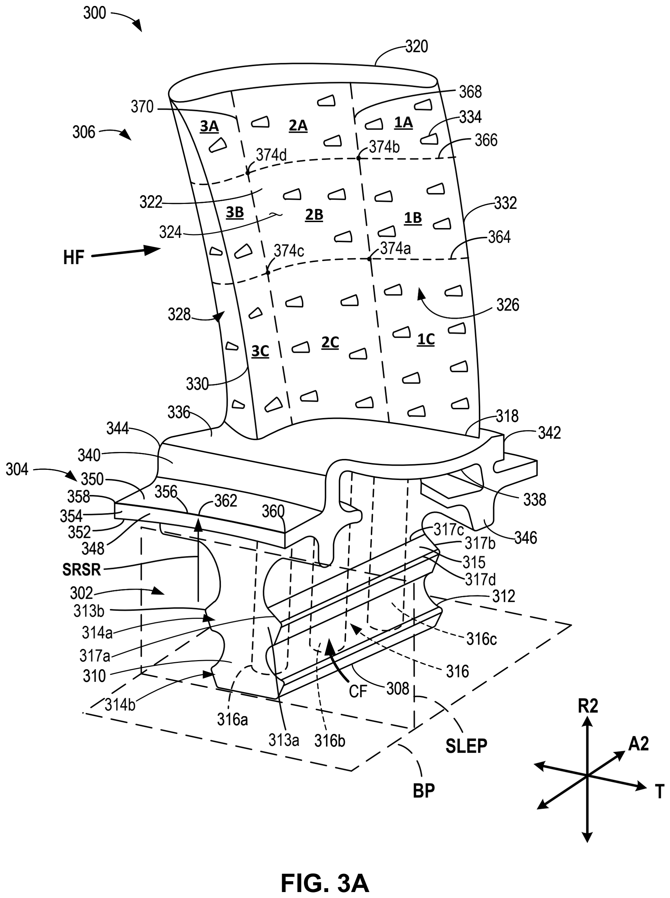

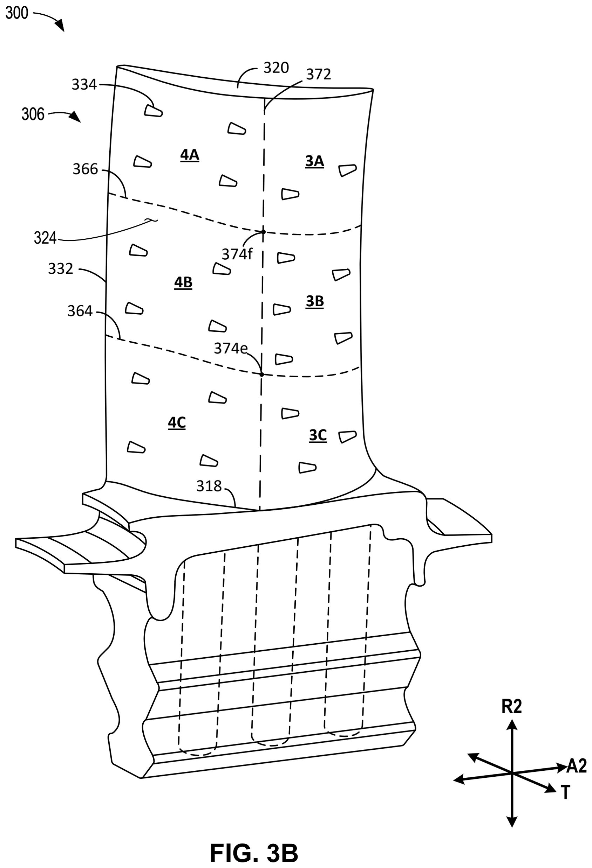

FIGS. 3A and 3B are perspective views of a single blade assembly 300 for the gas turbine engine 100 (FIG. 1). The blade assembly 300 can be implemented as a stage one blade assembly of the HP turbine 120 (FIGS. 1 and 2), which is the first stage of rotor blades after the combustion section 118 (FIGS. 1 and 2). All of the blade assemblies of a stage may be the same as the blade assembly 300. Thus, while this disclosure describes one blade assembly, it is understood that any of the features or aspects can likewise apply to all of the blade assemblies of a stage.

Referring to FIG. 3A, the blade assembly 300 includes a shank 302, a platform 304, and an airfoil 306 (also referred to as a blade or blade portion). In some examples, the blade assembly 300 is constructed as a single unitary part or component (e.g., a monolithic structure). In other examples, the shank 302, the platform 304, and/or the airfoil 306 can be constructed as separate parts or components that are coupled together to form the blade assembly 300.

A directional reference system is illustrated in FIGS. 3A and 3B. The shank 302 extends between a base 308 and the platform 304. The base 308 of the shank 302 is a flat surface that defines a plane, referred to herein as the base plane (denoted "BP"). A radial direction (denoted "R2") of the blade assembly 300 is a direction that is perpendicular to the base plane BP. Further, the shank 302 extends between a shank leading edge 310 and a shank trailing edge 312. The shank leading edge 310 is a flat surface that defines a plane, referred herein as the shank leading edge plane (denoted "SLEP"). An axial direction (denoted "A2") of the blade assembly 300 is a direction that is perpendicular to the shank leading edge plane SLEP. A tangential direction (denoted "T") is a direction perpendicular to both the radial direction R2 and the axial direction A2.

The shank 302 is used to mount the blade assembly 300 to the disk 200 (FIG. 2) of the gas turbine engine 100 such that blade assembly 300 drives rotation of the disk 200. In the illustrated example, the shank 302 is configured or shaped as a dovetail. The dovetail shape has multiple portions (sometimes referred to as tangs) that extend or flare outward in the tangential (T) direction. In the illustrated example of FIG. 3A, the shank 302 has a first dovetail portion 314a, referred to as the upper dovetail portion 314a, and a second dovetail portion 314b, referred to as the lower dovetail portion 314b. In other examples, the shank 302 can include additional dovetail portions (e.g., upper, middle, and lower dovetail portions). The disk 200 (FIG. 2) has a slot 202 (FIG. 2) with a matching dovetail shape that receives the shank 302. Each of the dovetail portions 314a, 314b overlaps with a portion of the disk 200 in the radial direction R2 and therefore mounts the blade assembly 300 in the slot 202 of the disk 200.

The upper dovetail portion 314a of the shank 302 is formed by a first extension 313a and a second extension 313b that extend or protrude outward in opposite directions in the tangential direction T. The first extension 313a has an upper dovetail loading surface 315. When the shank 302 is installed in the slot of the disk 200, the upper dovetail loading surface 315 engages a corresponding surface of the disk 200 and forms a high load surface interface. The upper dovetail loading surface 315 is entirely flat and does not include any of the curved sections above or below the surface 315. The upper dovetail loading surface 315 is defined between by a front edge 317a along the shank leading edge 310, a rear edge 317b along the shank trailing edge 312, an upper edge 317c, and a lower edge 317d. The area of the upper dovetail loading surface 315 is referred to as the loading area (LA). The loading area (LA) can be calculated using a standard length times width area calculation. The upper dovetail portion 314a has another loading surface on the second extension 313b. The loading surface on the second extension 313b has the same area as the loading surface 315 on the first extension 313a. However, the term loading area (LA) used herein only refers to one loading surface on the upper most dovetail portion of the shank 302.

As shown in FIG. 3A, the shank 302 has a plurality of inlet passages 316 (shown in dashed lines) for receiving a cooling fluid (denoted "CF") (e.g., bleed air) for cooling the blade assembly 300. In the illustrated example, the plurality of inlet passages 316 includes a leading edge inlet passage 316a, a middle inlet passage 316b, and a trailing edge inlet passage 316c. Each of the inlet passages 316a, 316b, 316c extends between the base 308 and one or more internal cooling conduits in the airfoil 306, disclosed in further detail herein. The inlet passages 316a, 316b, 316c receive the cooling fluid CF at the base 308. The cooling fluid CF flows through the inlet passages 316a, 316b, 316c and into the one or more cooling conduits in the airfoil 306. While in this example there are three inlet passages 316a, 316b 316c, in other examples, the shank 302 can include more or fewer inlet passages.

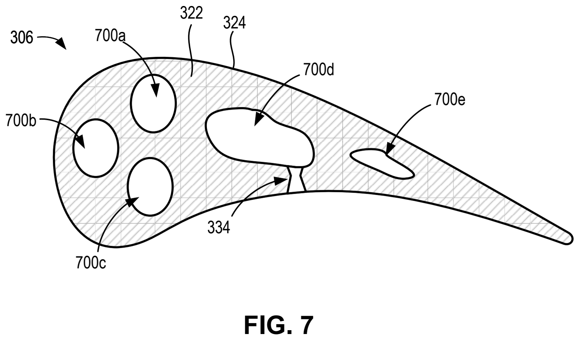

As shown in FIG. 3A, the airfoil 306 extends radially outward from the platform 304. The airfoil 306 includes a root 318 wherein the airfoil 306 is connected to the platform 304 and a tip 320 opposite the root 318. Additionally, the airfoil 306 includes an outer wall 322 defining an exterior surface 324 defining a pressure side 326 and a suction side 328 opposite the pressure side 326. The outer wall 322 extends between an airfoil leading edge 330 and an airfoil trailing edge 332 downstream from the airfoil leading edge 330. The airfoil leading edge 330 and the airfoil trailing edge 332 separate the pressure side 326 from the suction side 328. The blade assembly 300 has a plurality of internal cooling conduits (shown in FIG. 7) formed within the airfoil 306 that receive the cooling fluid (CF) from the inlet passages 316. During operation of the gas turbine engine 100 (FIG. 1), the cooling fluid CF is fed to the plurality of inlet passages 316 in the shank 302 and flows into the plurality of internal cooling conduits to cool the airfoil 306. The airfoil 306 has a plurality of cooling holes 334 that extend between the internal cooling conduits and the exterior surface 324 of the airfoil 306. As such, the cooling fluid (CF) flowing through the internal cooling conduits of the airfoil 306 is vented or exhausted through the cooling holes 334 and into the flow stream. As the cooling fluid (CF) passes outwardly through the cooling holes 334, the cooling fluid (CF) forms a thermal barrier of relatively cool fluid around the airfoil 306 (also called a cooling film), which helps reduce the temperature of the blade assembly 300.

The platform 304 has a first surface 336, referred to as an upper surface, and a second surface 338, referred to as a lower surface, opposite the upper surface 336. The airfoil 306 is coupled to and extends radially outward from the upper surface 336, and the shank 302 is coupled to and extends radially inward from the lower surface 338. The platform 304 includes a platform leading edge 340 and a platform trailing edge 342, opposite the platform leading edge 340. The platform 304 further includes a first slashface 344 and a second slashface 346, opposite the first slashface 344. When assembled, consecutive blade assemblies 300 are arranged in a circumferential direction about the centerline axis 108 (FIG. 1) with sequential slashfaces 344, 346 facing each other.

During operation of the gas turbine engine 100 (FIG. 1), the heated fluid flow HF flows along the blade assembly 300. The airfoil leading edge 330 is defined by a stagnation point with respect to the heated fluid flow HF. The heated fluid flow HF flows generally in the axial A direction, from forward to aft, while the local directionality can vary as the heated fluid flow HF is driven or turned within the gas turbine engine 100. Multiple blade assemblies 300 are mounted circumferentially to the disk 200 (FIG. 2) such that the platforms 304 of the blade assemblies 300 form a substantially continuous ring. The platform 304 helps to radially contain the heated fluid flow (HF) to protect the disk 200. The platform 304 acts to seal the space radially inward of the platform 304 between the flow path of the heated fluid flow (HF) and the disk 200. The disk 200 requires significant cooling to ensure the durability of the HP turbine 120 components.

Materials used to form the blade assembly 300 include, but are not limited to, steel, refractory metals such as titanium, or superalloys based on nickel, cobalt, or iron, ceramic matrix composites, or combinations thereof. The structures can be formed by a variety of methods, including additive manufacturing, casting, electroforming, or direct metal laser melting, in non-limiting examples.

As shown in FIG. 3A, the platform 304 has a stator rotor seal 348 that extends axially forward from the platform leading edge 340. The stator rotor seal 348 facilitates sealing of a forward buffer cavity (not shown) defined within the rotor assembly. The stator rotor seal 348 has an upper surface 350, a lower surface 352 opposite the upper surface 350, and a forward surface 354 between the upper surface 350 and the lower surface 352. The stator rotor seal 348 has an upper edge 356 between the upper surface 350 and the forward surface 354. The upper edge 356 is curved or arc- shaped. In particular, the upper edge 356 is curved between a first end point 358 at the first slashface 344 and a second end point 360 at the second slashface 346. The upper edge 356 of stator rotor seal 348 has a center point 362 that forms the peak of the arc.

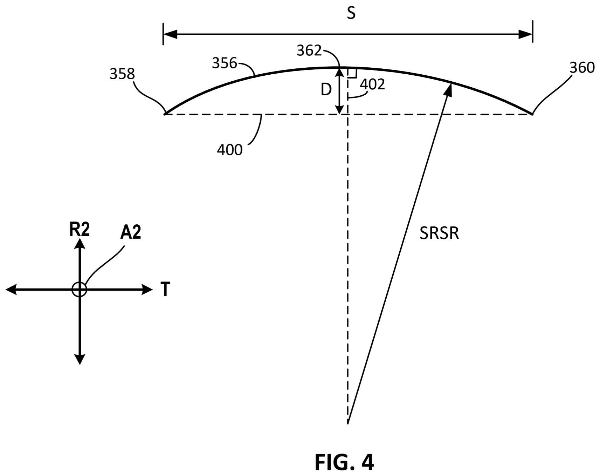

The upper edge 356 of the stator rotor seal 348 has a radius of curvature, referred to herein as a stator rotor seal radius (denoted "SRSR"). The center of the radius of curvature is the centerline axis 108 (FIG. 1) of the gas turbine engine 100 (FIG. 1). A first line 400 is defined between the two end points 358, 360, and a second line 402 is defined between the first line 400 and the center point 362 of the arc. As shown in FIG. 4, the SRSR (i.e., the radius of curvature of the upper edge 356 of the stator rotor seal 348 (FIG. 3A)) can be calculated using a straight-line distance (S) of the line 400 between the two the end points 358, 360, and a maximum deflection (D), in the radial R2 direction, of the second line 402. The SRSR can be calculated using SRSR = (D/2) + (S² / (8xD)).

Referring back to FIG. 3A, the exterior surface 324 of the airfoil 306 can be divided sections or portions, referred to herein as zones. In particular, the exterior surface 324 is divided into twelve zones. As discussed in further detail herein, the metering areas of the cooling holes 334 in certain ones of the zones has been determined to have an effect on the durability and aerodynamic performance of the blade assembly 300.

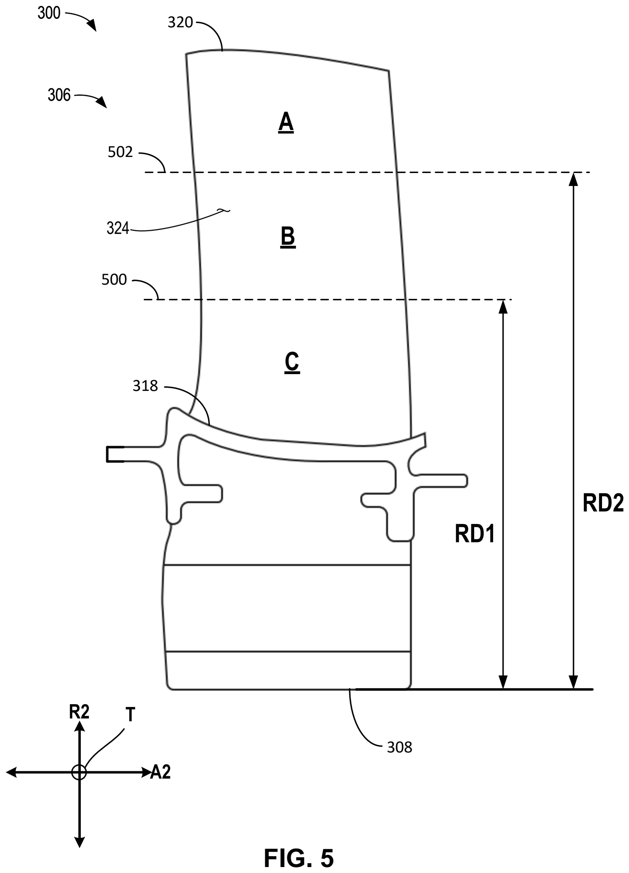

FIG. 5 is a side view of the blade assembly 300. As disclosed above, the base plane BP is a plane defined by the base 308 and is perpendicular to the radial direction R2. A first plane 500 extends through the airfoil 306. The first plane 500 is parallel to the base plane BP and is located a first radial distance (denoted "RD1") from the base plane 308. A second plane 502 extends through the airfoil 306. The second plane 502 is parallel to the base plane 308 and is located a second radial distance (denoted RD2) from the base plane BP. The second radial distance (RD2) is greater than the first radial distance (RD1). The first radial distance (RD1) is about 0.0445 meters (e.g. ±0.0002 meters) and the second radial distance (RD2) is about 0.0559 meters (e.g. ±0.0002 meters). As shown in FIG. 3A, the exterior surface 324 is divided into three vertically arranged zones by a first perimeter line 364 and a second perimeter line 366, which may also be referred to as first and second span cuts, respectively. The first and second perimeter lines 364, 366 extend around the perimeter of the airfoil 306 at different radial heights. The first perimeter line 364 (FIG. 3A) is defined by an intersection of the first plane 500 and the exterior surface 324 of the airfoil 306. The second perimeter line 366 (FIG. 3A) is defined by an intersection of the second plane 502 and the exterior surface 324 of the airfoil 306. Vertical Zone A is defined between the second perimeter line 366 and the tip 320, vertical Zone B is defined between the first perimeter line 364 and the second perimeter line 366, and vertical Zone C is defined between the root 318 and the first perimeter line 364.

FIG. 3B is a perspective view of a suction side of the blade assembly of FIG. 3A, in accordance with an exemplary embodiment of the present disclosure. Referring to FIG. 3A and to FIG. 3B, the exterior surface 324 is divided into four horizontally arranged zones by three lines 368, 370 (FIG. 3A), and 372 (FIG. 3B) defined along the exterior surface 324 of the airfoil 306.

Horizontal Zone 1 is defined between the airfoil trailing edge 332 and the first line 368, horizontal Zone 2 is defined between the first line 368 and the second line 370, horizontal Zone 3 is defined between the second line 370 and the third line 372, and horizontal Zone 4 is defined between the third line 372 and the airfoil trailing edge 332. The lines 368, 370, 372 are defined by certain points along the first and second perimeter lines 364, 366. As shown in FIG. 3A, the first line 368 is defined by a first point 374a on the first perimeter line 364 and a second point 374b on the second perimeter line 366. The first line 368 connects the first and second points 374a, 374b and extends to the root 318 and the tip 320. As shown in FIG. 3A, the second line 370 is defined by a third point 374c on the first perimeter line 364 and a fourth point 374d on the second perimeter line 366. The second line 370 connects the third and fourth points 374c, 374d and extends to the root 318 and the tip 320. As shown in FIG. 3B, the third line 372 is defined by a fifth point 374e on the first perimeter line 364 and a sixth point 374f on the second perimeter line 366. The third line 372 connects the fifth and sixth points 374e, 374f and extends to the root 318 and the tip 320.

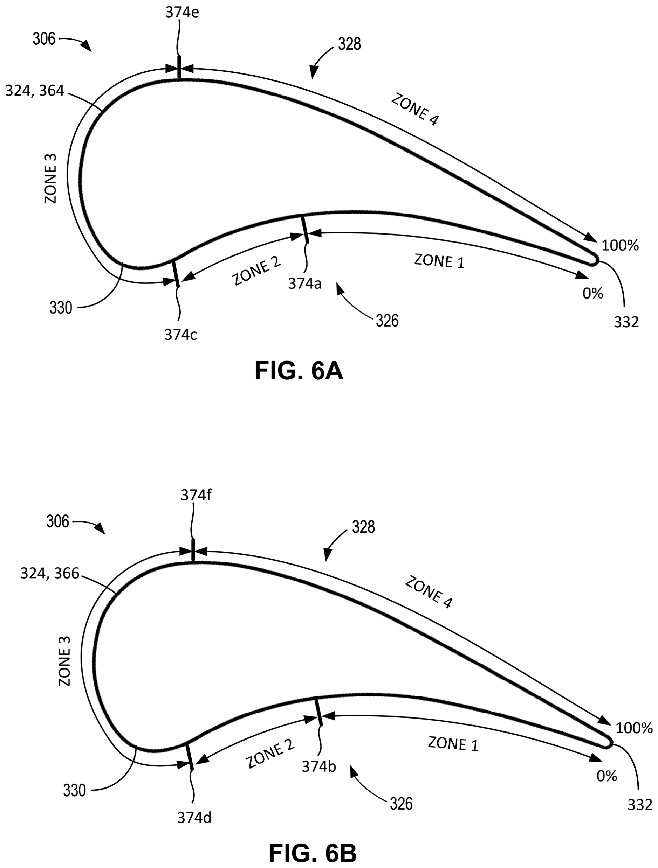

The points 374a-374f are defined at certain percentages around the exterior surface 324 of the airfoil 306. The percentages start at 0% at the airfoil trailing edge 332 and increase along the pressure side 326, the airfoil leading edge 330, and the suction side 328 to the airfoil trailing edge 332 at 100%. FIG. 6A is a cross-sectional view of the airfoil 306 taken along the first plane 500 showing the locations of the points 374a, 374c, 374e along the first perimeter line 364 on the exterior surface 324. FIG. 6B is a cross-sectional view of the airfoil 306 taken along the second plane 502 showing the locations of the points 374b, 374d, 374f along the second perimeter line 366 on the exterior surface 324.

Table 1 shows the percentages along the first and second perimeter lines 364, 366 for the points that define horizontal Zones 1-4.

**TABLE 1**

| | Zone 1 | Zone 2 | Zone 3 | Zone 4 |
|---|---|---|---|---|
| 1^{st} Plane | 0%-19.6% | 19.6%-30% | 30%-60% | 60%-100% |
| 2^{nd} Plane | 0%-16.7% | 16.7%-34% | 34%-60% | 60%-100% |

According to Table 1, the first point 374a corresponds to 19.6% along the first perimeter line 364 on the exterior surface 324, and the second point 374b corresponds to 16.7% along the second perimeter line 366 on the exterior surface 324. The first line 368 connects the first and second points 374a, 374b and extends to the root 318 and the tip 320. Horizontal Zone 1 is defined between the airfoil trailing edge 332 and the first line 368.

According to Table 1, the third point 374c corresponds to 30% along the first perimeter line 364 on the exterior surface 324, and the fourth point 374d corresponds to 34% along the second perimeter line 366 on the exterior surface 324. The second line 370 connects the third and fourth points 374c, 374d and extends to the root 318 and the tip 320. Horizontal Zone 2 is defined between the first line 368 and the second line 370.

According to Table 1, the fifth point 374e corresponds to 60% along the first perimeter line 364 on the exterior surface 324, and the sixth point 374f corresponds to 60% along the second perimeter line 366 on the exterior surface 324. The third line 372 connects the fifth and sixth points 374e, 374f and extends to the root 318 and the tip 320. Horizontal Zone 3 is defined between the second line 370 (FIG. 3A) and the third line 372 (FIG. 3B). Lastly, horizontal Zone 4 is defined between the third line 372 and the airfoil trailing edge 332. As described above, the percentages are measured as starting at 0% at the airfoil trailing edge 332 and increasing along the pressure side 326, the airfoil leading edge 330, and the suction side 328 to 100% at the airfoil trailing edge 332.

Therefore, the first perimeter line 364, the second perimeter line 366, the first line 368, the second line 370, and the third line 372 divide the exterior surface 324 of the airfoil 306 into twelve zones. In particular, the twelve zones are defined by the three vertical Zones A-C and the four horizontal Zones 1-4. The zones are referenced herein as 1A, 1B, 1C, 2A, 2B, 2C, 3A, 3B, 3C, 4A, 4B, and 4C, which are labeled in FIGS. 3A and 3B on the exterior surface 324 of the airfoil 306.

As shown in FIG. 3A, Zone 1A is defined between the tip 320, the second perimeter line 366, the airfoil trailing edge 332, and the first line 368. Zone 1B is defined between the second perimeter line 366, the first perimeter line 364, the airfoil trailing edge 332, and the first line 368. Zone 1C is defined between the first perimeter line 364, the root 318, the airfoil trailing edge 332, and the first line 368.

As shown in FIG. 3A, Zone 2A is defined between the tip 320, the second perimeter line 366, the first line 368, and the second line 370. Zone 2B is defined between the second perimeter line 366, the first perimeter line 364, the first line 368, and the second line 370. Zone 2C is defined between the first plane 364, the root 318, the first line 368, and the second line 370.

As shown in FIGS. 3A and 3B, Zone 3A is defined between the tip 320, the second perimeter line 366, the second line 370, and the third line 372. Zone 3B is defined between the second perimeter line 366, the first perimeter line 364, the second line 370, and the third line 372. Zone 3C is defined between the first perimeter line 364, the root 318, the second line 370, and the third line 372.

As shown in FIG. 3B, Zone 4A is defined between the tip 320, the second perimeter line 366, the third line 372, and the airfoil trailing edge 332. Zone 4B is defined between the second perimeter line 366, the first perimeter line 364, the third line 372, and the airfoil trailing edge 332. Zone 4C is defined between the first perimeter line 364, the root 318, the third line 372, and the airfoil trailing edge 332.

Each of the Zones 1A-4C may have one or more cooling holes 334. In some examples, the Zones 1A-4C have different numbers of cooling holes 334. In some examples one or more of the Zones 1A-4C may not have any cooling holes. For example, while cooling holes 334 are generally shown in all of the Zones, in some instances, some of the Zones (e.g., Zone 4A) may not have any cooling holes.

Each of the cooling holes 334 has a cooling hole metering area that is the smallest or minimum area of the cooling hole 334. FIG. 7 shows a cross-sectional view of the airfoil 306. The airfoil 306 has a plurality of internal cooling conduits 700a-700e defined within the airfoil 306 through which the cooling fluid flows. The internal cooling conduits 700a-700e are fluidly coupled to the inlet passages 316 (FIG. 3A) in the shank 302 (FIG. 3A) and receive cooling fluid from the inlet passages 316. In some examples, one or more of the internal cooling conduits 700a-700e are fluidly coupled to each other, while other ones of the internal cooling conduits 700a-700e are fluidly isolated from each other. Flowing cooling fluid through the internal cooling conduits 700a-700e helps to reduce the temperature of the airfoil 306 such that the airfoil 306 can withstand the relatively high temperatures produced by the combustion section 118. In this example, there are five internal cooling conduits 700a-700e, but in other examples the airfoil 306 can include more or fewer internal cooling conduits. Further, the internal cooling conduits 700a-700e can be shaped differently. Each of the cooling holes 334 (only one of which is shown in FIG. 7) are fluidly coupled to one of the internal cooling conduits 700a-700e. In particular, the cooling holes 334 are defined in the outer wall 322 and extend between the exterior surface 324 and the one or more internal cooling conduits 700a-700e. As such, the cooling fluid flows through the internal cooling conduits 700a-700e and exits out of the cooling holes 334.

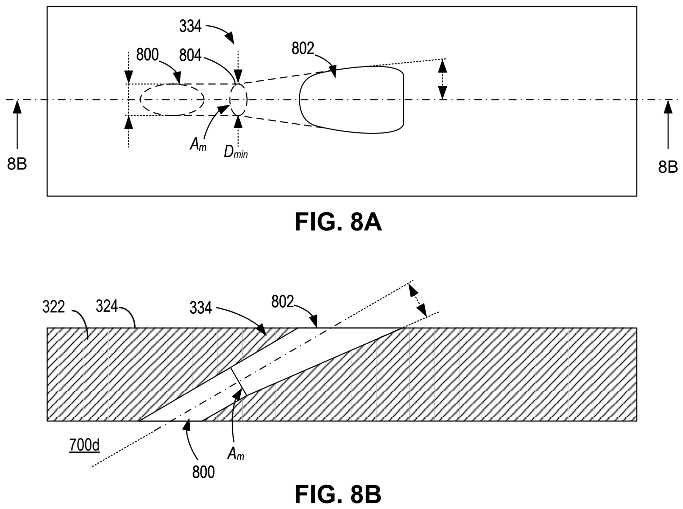

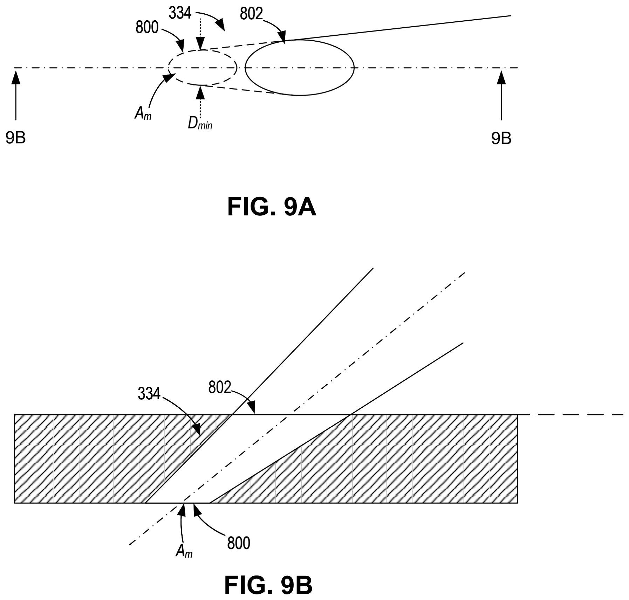

FIG. 8A shows a side view of one of the cooling holes 334, and FIG. 8B is a cross-sectional view of the cooling hole 334 of FIG. 8A taken along line 8B-8B. The cooling hole 334 is a channel or passage that extends through the outer wall 322 of the airfoil 306 between an inlet opening 800 at the internal cooling conduit 700d and an outlet opening 802 at the exterior surface 324 of the airfoil 306. Each of the other cooling holes 334 is similarly defined between one of the internal cooling conduits 700a-700e and the exterior surface 324. The cooling holes 334 have a generally circular or conical shape, although the opening can vary along a depth between the inlet opening and the outlet opening of the corresponding cooling hole. Hole shape can also be slotted, rectangular, or racetrack, for example. In some examples, at least one of the cooling holes 334 has a diameter or area that changes (e.g., increases or decreases) between the inlet opening 800 and the outlet opening 802 of the respective cooling hole 334. In the example of FIGS. 8A and 8B, a 7-7-7 metering hole shape is illustrated. The 7-7-7 metering hole arrangement indicates that both sides of the opening have a 7 degree side angle, and a 7 degree forward angle. The example of FIGS. 8A and 8B illustrates that the area or diameter of the hole can change as it moves from the inlet opening 800 to the outlet opening 802 through the outer wall 322 of the airfoil 306. In FIGS. 8A and 8B, the cooling hole 334 has a relatively constant diameter between the inlet opening 800 and a metering feature 804, and the cooling hole 334 expands in diameter from the metering feature 804 to the outlet opening 802. FIGS. 9A and 9B illustrate another example of a cooling hole 334. In FIGS. 9A and 9B, the diameter of the cooling hole increases continuously from the inlet opening 800 to the outlet opening 802.

Each of the cooling holes 334 defines a cooling hole metering area (Aₘ) that is a minimum area of the cooling hole 334 between the inlet opening 800 of the cooling hole 334 and the outlet opening 802 of the cooling hole 334. The cooling hole metering area (Aₘ) is calculated from a smallest diameter (Dₘᵢₙ) of the cooling hole 334. For example, in FIGS. 8A and 8B, the smallest diameter Dₘᵢₙ corresponds to the metering feature 804, whereas in FIGS. 9A and 9B the smallest diameter Dₘᵢₙ corresponds to the inlet opening 802. The cooling hole metering area (Aₘ) can be calculated as follows: ${A}_{m} = \left(Cooling Hole Metering Area\right) = π ∗ {\left(\frac{{D}_{min}}{2}\right)}^{2}$

In some examples, at least one of the cooling holes has an area that is constant between the inlet opening 800 and the outlet opening 802. In such an example, the cooling hole metering area can be measured at any location at or between the inlet opening 800 and the outlet opening 802.

As described in connection with FIGS. 3A and 3B, some of the Zones 1A-4C may contain one or more outlets of cooling holes 334. In some examples, at least one of the zones does not contain any cooling holes outlets. Therefore, while cooling hole outlets are generally illustrated in each of the Zones 1A-4C, it is understood that in some examples one or more of the Zones 1A-4C may not contain any cooling hole outlets. Each of the Zones 1A-4C has or defines a zone metering area. The zone metering area for a zone is the sum or total of the cooling hole metering areas of the cooling holes 334 having outlet openings in that particular zone. For example, if Zone 1A has outlets for three cooling holes 334, the zone metering area for Zone 1A would be the sum of the cooling hole metering areas for the three cooling holes in Zone 1A. The zone metering area for a zone represents the total area of flow of cooling fluid out of that zone on the airfoil 306.

The blade assemblies 300 of the HP turbine 120 and, specifically, the stage one blade assemblies 300 of the HP turbine 120 have the highest flow path temperature of any blade set. These stage one blade assemblies also rotate at extremely high angular velocities. The extreme temperature environment and the high rotational speeds impart large forces on the stage one blade assemblies 300 that can lead to creep and fatigue, especially along the suction side of the airfoil. Creep and fatigue may result in an unexpected or premature part replacement that limits engine Time on Wing (TOW). Therefore, there is a need for a blade assembly with high durability that can withstand these large centrifugal stresses and reduce (e.g., minimize) creep and fatigue.

The inventors developed multiple blade assembly designs and determined that the zone metering areas of Zones 2C, 3A, and 4A have a significant effect on the durability (e.g., creep and/or fatigue resistance) of the blade assembly 300 for a given redline EGT and redline CS. In particular, the inventors determined that increasing the zone metering area of Zone 2C, and decreasing the zone metering areas of Zones 3A and 4A have a positive effect on the durability of the blade assembly 300. The zone metering areas can be changed (e.g., increased or decreased) by adding or removing cooling holes 334 from the particular zone and/or changing the cooling hole metering areas of the individual cooling holes 334 with outlets in the particular zone. Increasing the zone metering area of a zone can increase cooling fluid flow, which helps to reduce the temperature of the blade assembly 300, but also leads to less material for ensuring the structural integrity of the blade assembly 300. Conversely, reducing the zone metering area of a zone can result in higher structural integrity, but reduces cooling fluid flow and therefore results in an increase in the temperature of the blade assembly 300. The example blade assemblies disclosed herein balance the cooling and structural integrity characteristics to achieve a blade assembly with high durability.

Therefore, the inventors determined during the course of their blade assembly design that the zone metering areas of Zones 2C, 3A, and 4A, the redline EGT, and the redline CS have an effect on the durability of the blade assembly 300. Based on these parameters, the inventors created solutions with relatively high blade durability (e.g., reduced creep and fatigue, absence of crack formation or propagation after a number of engine cycles) for a defined engine environment. Table 2 below illustrates fourteen examples (denoted Ex. 1-14) of blade assemblies 300 developed by the inventors. Table 2 includes values for the metering area of Zone 2C (referred to as "MA1"), the metering area for Zone 3A (referred to as "MA2"), the metering area for Zone 4A (referred to as "MA3"), the redline EGT values, and the redline CS values for each of the Examples 1-14.

**TABLE 2**

| | Metering Area for Zone 2C (MA1) | Metering Area for Zone 3A (MA2) | Metering Area for Zone 4A (MA3) | Redline Exhaust Gas Temperature (EGT) | Redline Core Speed (CS) |
|---|---|---|---|---|---|
| Units | m² | m² | m² | °C | Hz |
| Ex. 1 | 1.46E-06 | 1.24E-06 | 0.00E+00 | 1120 | 353 |
| Ex. 2 | 1.02E-06 | 1.61E-06 | 1.46E-07 | 988 | 306 |
| Ex. 3 | 1.33E-06 | 1.28E-06 | 1.39E-07 | 1060 | 328 |
| Ex. 4 | 1.04E-06 | 1.26E-06 | 6.65E-08 | 995 | 311 |
| Ex. 5 | 1.17E-06 | 1.61E-06 | 9.59E-08 | 1056 | 324 |
| Ex. 6 | 1.27E-06 | 1.54E-06 | 1.22E-07 | 1074 | 334 |
| Ex. 7 | 1.41E-06 | 1.49E-06 | 1.16E-07 | 1112 | 340 |
| Ex. 8 | 1.04E-06 | 1.31E-06 | 3.44E-08 | 1025 | 328 |
| Ex. 9 | 1.12E-06 | 1.37E-06 | 5.57E-08 | 997 | 332 |
| Ex. 10 | 1.08E-06 | 1.53E-06 | 2.35E-08 | 1007 | 316 |
| | | | | | |
| Ex. 11 | 7.29E-07 | 1.69E-06 | 2.20E-07 | 1120 | 352 |
| Ex. 12 | 7.11E-07 | 1.79E-06 | 2.84E-07 | 1019 | 352 |
| Ex. 13 | 5.85E-07 | 1.91E-06 | 2.25E-07 | 1024 | 310 |
| Ex. 14 | 6.04E-07 | 1.94E-06 | 2.47E-07 | 1101 | 345 |

The inventors found that engines with blade assembly designs having parameters defined in Examples 1-10 exhibit relatively high structural integrity and durability while remaining within current engine constraints. Conversely, Examples 11-14 have relatively low durability for the particular engine environment.

The example engines with blade assemblies developed by the inventors shown in Table 2 can be characterized by an Expression (EQ) that can be used to distinguish those designs in Examples 1-10 that meet the performance (durability) requirements from those designs in Examples 11-14 that do not meet the performance requirements. As such, the Expression (EQ) can be used to identify an improved blade assembly design, better suited for a particular engine operating environment and taking into account the constraints imposed on blade assembly design with cooling holes used in such a system.

The Expression (EQ) is defined as: $EQ = \frac{\left(100∗{\left(\frac{MA 1 \left({m}^{2}\right)}{0.005 {m}^{2}}\right)}^{- 2}∗\left(\frac{MA 2 \left({m}^{2}\right)}{0.1 {m}^{2}}+\frac{MA 3 \left({m}^{2}\right)}{0.107 {m}^{2}}\right)\right)}{\left(0.2∗\left(\frac{Redline CS \left(Hz\right)}{329 Hz}\right)∗{\left(\frac{Redline EGT \left(°C\right)}{500 ° C}\right)}^{3}\right)}$ MA1 represents the zone metering area for Zone 2C (FIG. 3A). MA2 represents the zone metering area for Zone 3A (FIGS. 3A and 3B). MA3 represents the zone metering of Zone 4A (FIG. 3B). Redline EGT represents the redline exhaust gas temperature, or the maximum operating temperature for the gas turbine engine 100 measured at a particular location within the gas turbine engine 100. Redline CS represents the redline core speed of the engine and in turn the rotational speed of the blade assembly 300. The redline EGT and CS can differ based upon engine design limits and operational parameters.

Values for the Expression (EQ) for each of the Examples 1-14 of Table 2 are shown in Table 3.

**TABLE 3**

| | Metering Area for Zone 2C (MA1) | Metering Area for Zone 3A (MA2) | Metering Area for Zone 4A (MA3) | Redline Exhaust Gas Temperature (EGT) | Redline Core Speed (CS) | Expression (EQ) |
|---|---|---|---|---|---|---|
| Units | m² | m² | m² | °C | Hz | dimensionless |
| Ex. 1 | 1.46E-06 | 1.24E-06 | 0.00E+00 | 1120 | 353 | 6038.072 |
| Ex. 2 | 1.02E-06 | 1.61E-06 | 1.46E-07 | 988 | 306 | 29238.554 |
| Ex. 3 | 1.33E-06 | 1.28E-06 | 1.39E-07 | 1060 | 328 | 9736.943 |
| Ex. 4 | 1.04E-06 | 1.26E-06 | 6.65E-08 | 995 | 311 | 23485.440 |
| Ex. 5 | 1.17E-06 | 1.61E-06 | 9.59E-08 | 1056 | 324 | 15755.082 |
| Ex. 6 | 1.27E-06 | 1.54E-06 | 1.22E-07 | 1074 | 334 | 8650.641 |
| Ex. 7 | 1.41E-06 | 1.49E-06 | 1.16E-07 | 1112 | 340 | 9285.605 |
| Ex. 8 | 1.04E-06 | 1.31E-06 | 3.44E-08 | 1025 | 328 | 14083.612 |
| Ex. 9 | 1.12E-06 | 1.37E-06 | 5.57E-08 | 997 | 332 | 12800.899 |
| Ex. 10 | 1.08E-06 | 1.53E-06 | 2.35E-08 | 1007 | 316 | 16713.616 |
| | | | | | | |
| Ex. 11 | 7.29E-07 | 1.69E-06 | 2.20E-07 | 1120 | 352 | 36863.802 |
| Ex. 12 | 7.11E-07 | 1.79E-06 | 2.84E-07 | 1019 | 352 | 81225.540 |
| Ex. 13 | 5.85E-07 | 1.91E-06 | 2.25E-07 | 1024 | 310 | 86658.185 |
| Ex. 14 | 6.04E-07 | 1.94E-06 | 2.47E-07 | 1101 | 345 | 53213.935 |

Based on the Expression (EQ) values of Examples 1-10 in Table 2, it was determined that gas turbine engines with blade assembly designs with an EQ value in the range of 6038.072 to 29238.554 (i.e., 6038.072 ≤ EQ ≤ 29238.554). advantageously meet the durability requirements while remaining within desired tolerances and being capable of use in existing engine systems. As such, benefits are realized when a manufactured component including the blade assembly 300 have a geometry where Expression (EQ) falls within the range 6038.072 to 29238.554 (i.e., 6038.072 ≤ EQ ≤ 29238.554). Such benefits include a reduction in stress at the airfoil trailing edge 332, which increases the lifetime of the blade assembly 300 and therefore extends the time between a need for replacement parts. This provides for increased durability for the blade assembly 300, which decreases required maintenance and costs, while increasing overall engine reliability.

Further still, the benefits included herein provide for a blade assembly 300 that fits within existing engines. For example, the values for Expression (EQ) as provided herein take existing engines into consideration, permitting replacement of current blade assemblies with replacement blade assemblies (or new blade assemblies) having the parameters of the blade assembly 300 described herein. Such consideration provides for replacing and improving current engine systems without requiring the creation of new engine parts capable of holding the blade assembly 300. This provides for improving current engine durability without increasing costs to prepare new engines or further adapt existing engines.

Table 4 below illustrates minimum and maximum values for the zone metering area of Zone 2C (MA1), the zone metering area of Zone 3A (MA2), the zone metering area of Zone 4A (MA3), the redline EGT, and the redline CS, along with a range of values for Expression (EQ) suited for a blade assembly that meets the durability requirements.

**TABLE 4**

| **Parameter** | **Units:** | **Minimum:** | **Maximum:** |
|---|---|---|---|
| Zone Metering Area for Zone 2C (MA1) | meters squared (m²) | 1.02E-06 | 1.46E-06 |
| Zone Metering Area for Zone 3A (MA2) | meters squared (m²) | 1.24E-06 | 1.61E-06 |
| Zone Metering Area for Zone 4A (MA3) | meters squared (m²) | 0.00E+00 | 1.46E-07 |
| Redline Exhaust Gas Temperature (EGT) | degree Celsius (°C) | 988 | 1120 |
| Redline Core Speed (CS) | hertz (Hz) | 306 | 353 |
| Expression (EQ) | dimensionless | 6038.072 | 29238.554 |

As shown in Table 4 above, the zone metering area for Zone 4A is 0.0 to 1.46E-07. As such, in some examples, the zone metering area can be 0, indicating that Zone 4A does not have any cooling holes.

Additional benefits associated with a blade assembly 300 having parameters of Table 4 include a quick assessment of design parameters in terms of blade assembly size, cooling hole size and number, platform size, and shank size. Narrowing these multiple factors to a region of possibilities saves time, money, and resources. The blade assembly 300 with zone metering areas described herein enables the development and production of high-performance turbine engines and blade assemblies across multiple performance metrics within a given set of constraints.

As noted above, designs such as Examples 11-14 of Tables 2 and 3 were found to have relatively low durability for a particular engine environment. This is reflected in the associated Expression (EQ) value outside the range of 6038.072 to 29238.554. Lower durability results in less time on wing (TOW) and greater maintenance costs.

Additionally or alternatively, designs outside the range of EQ may attempt to increase durability by making sacrifices in terms of weight, aerodynamic performance, and efficiency. For example, the standard practice for solving the problem of improving blade assembly durability has been to utilize stronger material. However, such materials lead to increased costs, system weight, and overall space occupied by the blade assembly. Using a cost-benefit analysis, the overall engine efficiency may be reduced and related components may have to be redesigned to compensate for the stronger materials. In some cases, this result of such a cost-benefit analysis is impractical or impossible. Therefore, a solution for reducing stresses located in airfoils presently used in existing engines is needed, without requiring redesign of related components or without sacrificing overall engine efficiency.

In other examples, increasing the size of the airfoil or related components, utilizing stronger material, and/or providing additional cooling features can combat centrifugal and thermal stresses. However, such increased size, stronger materials, and additional cooling features can lead to increased costs, system weight, overall space occupied by the blade assembly, and performance loss, as well as increased local stresses at the cooling conduits due to increased weight and size relating to the centrifugal forces. Increased cooling features results in a relatively less amount of material utilized, which can result in an increase in local stresses at the cooling conduits. Therefore, a solution for reducing stresses at the cooling conduits is needed without otherwise increasing stresses, weight, size, or decreasing engine efficiency.

As disclosed above, the inventors have found that the Examples 1-10 of Tables 2 and 3 provide successful solutions without the need to increase thickness, weight, strength, or the number of cooling features. The Examples 1-10 of Tables 2-3 illustrate that designs having an Expression (EQ) value from 6038.072 to 29238.554 (i.e., 6038.072 ≤ EQ ≤ 29238.554) achieve increased durability without penalties to size, weight, or strength. In other words, rather than making areas of the airfoil thicker, or using heavier, stronger materials, or adding additional cooling features, effective stress reduction can be achieved by the Examples 1-10 of Tables 2 and 3.

As disclosed above, the inventors created blade assemblies with relatively high durability (e.g., creep and/or fatigue resistance) for a defined engine operating environment.

To the extent one or more structures provided herein can be known in the art, it should be appreciated that the present disclosure can include combinations of structures not previously known to combine, at least for reasons based in part on conflicting benefits versus losses, desired modes of operation, or other forms of teaching away in the art.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and can include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects of the disclosure are provided by the subject matter of the following clauses:
A gas turbine engine, comprising: a turbomachine configured to generate a redline exhaust gas temperature (EGT) in a range of 988 degrees Celsius (°C) to 1120°C and having a redline core speed (CS) in a range of 306 Hertz to 353 Hertz, the turbomachine extending along an centerline axis and including: a compressor section; a combustor; and a turbine section, the turbine section including a blade assembly rotatable about the centerline axis, the blade assembly comprising: a platform having an upper surface and a lower surface; a shank coupled to the lower surface, the shank having a base defining a base plane; and an airfoil having: an outer wall defining an exterior surface, the exterior surface defining a pressure side and a suction side; a leading edge and a trailing edge; and a root and a tip, the airfoil coupled to the upper surface at the root, wherein one or more internal cooling conduits are defined in the airfoil, wherein a plurality of cooling holes are defined in the outer wall that extend between the exterior surface and the one or more internal cooling conduits, wherein each of the cooling holes defines a cooling hole metering area that is a minimum area of the cooling hole between an inlet opening of the cooling hole and an outlet opening of the cooling hole, wherein a first plane extends through the airfoil, the first plane being parallel to the base plane and located a first radial distance RD1 from the base plane, the first radial distance RD1 being about 0.0445 meters, wherein a second plane extends through the airfoil, the second plane being parallel to the base plane and located a second radial distance RD2 from the base plane, the second radial distance RD2 being about 0.0559 meters, wherein a first perimeter line is defined by an intersection of the first plane and the exterior surface, wherein a second perimeter line is defined by an intersection of the second plane and the exterior surface, wherein a first line is defined by a first point on the first perimeter line on the exterior surface and a second point on the second perimeter line on the exterior surface and extending between the root and the tip of the airfoil, wherein a second line is defined a third point on the first perimeter line on the exterior surface and a fourth point on the second perimeter line on the exterior surface and extending between the root and the tip, wherein a third line is defined by a fifth point on the first perimeter line on the exterior surface and a sixth point on the second perimeter line on the exterior surface and extending between the root and the tip, wherein the first point corresponds to 19.6% along the first perimeter line on the exterior surface, the second point corresponds to 16.7% along the second perimeter line on the exterior surface, the third point corresponds to 30% along the first perimeter line on the exterior surface, the fourth point corresponds to 34% along the second perimeter line on the exterior surface, the fifth point corresponds to 60% along the first perimeter line on the exterior surface, and the sixth point corresponds to 60% along the second perimeter line on the exterior surface, wherein the percentages of the first, second, third, fourth, fifth, and sixth points are measured as starting at the trailing edge and increasing along the pressure side, the leading edge, and the suction side to the trailing edge of the airfoil, wherein a first zone is defined between the first perimeter line, the root, the first line, and the second line, wherein a sum of the cooling hole metering areas of the cooling holes having outlet openings in the first zone defines a first zone metering area (MA1), wherein the first zone metering area (MA1) is 1.02E-06 to 1.46E-06 m², wherein a second zone is defined between the tip, the second perimeter line, the second line, and the third line, wherein a sum of the cooling hole metering areas of the cooling holes having outlet openings in the second zone defines a second zone metering area (MA2), wherein the second zone metering area (MA2) is 1.24E-06 to 1.61E-06 m², wherein a third zone is defined between the tip, the second perimeter line, the third line, and the trailing edge, wherein a sum of the cooling hole metering areas of the cooling holes having outlets in the third zone defines a third zone metering area (MA3), wherein the third zone metering area (MA3) is 0 to 1.46E-07 m², and wherein, $6038.072 \leq \frac{\left(\left(100∗\right.{\left(\frac{MA 1 \left({m}^{2}\right)}{0.005 {m}^{2}}\right)}^{- 2}∗\left(\frac{MA 2 \left({m}^{2}\right)}{0.1 {m}^{2}}+\frac{MA 3 \left({m}^{2}\right)}{0.107 {m}^{2}}\right)\right)}{\left(0.2∗\left(\frac{Redline CS \left(Hz\right)}{329 Hz}\right)∗{\left(\frac{Redline EGT \left(°C\right)}{500 ° C}\right)}^{3}\right)} \leq 29238.554 .$

The gas turbine engine of any preceding clause, wherein the first perimeter line, the second perimeter line, the first line, the second line, and the third line divide the exterior surface of the airfoil into twelve zones.

The gas turbine engine of any preceding clause, wherein at least one of the zones does not contain any cooling holes.

The gas turbine engine of any preceding clause, wherein at least one of the cooling holes has an area that changes between the inlet opening and the outlet opening of the corresponding cooling hole.

The gas turbine engine of any preceding clause, wherein at least one of the cooling holes has an area that is constant between the inlet opening and the outlet opening of the corresponding cooling hole.

The gas turbine engine of any preceding clause, wherein the airfoil has a plurality of internal cooling conduits, and wherein each of the cooling holes is fluidly coupled to one of the plurality of internal cooling conduits.

The gas turbine engine of any preceding clause, wherein the shank has a plurality of inlet passages fluidly coupled to the plurality of internal cooling conduits in the airfoil.

The gas turbine engine of any preceding clause, wherein the blade assembly is a stage one blade assembly of a high-pressure turbine of the turbine section.

The gas turbine engine of any preceding clause, further including a fan section, and wherein the gas turbine engine is configured as a turbofan.

A blade assembly for a gas turbine engine having a turbomachine configured to generate a redline exhaust gas temperature (EGT) in a range of 988 degrees Celsius (°C) to 1120°C and having a redline core speed (CS) in a range of 306 Hertz to 353 Hertz, the blade assembly to be mounted to a disk of a turbine section and rotatable about a centerline axis of the gas turbine engine , the blade assembly comprising: a platform having an upper surface and a lower surface; a shank coupled to the lower surface, the shank having a base defining a base plane; and an airfoil having: an outer wall defining an exterior surface, the exterior surface defining a pressure side and a suction side; a leading edge and a trailing edge; and a root and a tip, the airfoil coupled to the upper surface at the root, wherein one or more internal cooling conduits are defined in the airfoil, wherein a plurality of cooling holes are defined in the outer wall that extend between the exterior surface and the one or more internal cooling conduits, wherein each of the cooling holes defines a metering area that is a minimum area of the cooling hole between an inlet opening of the cooling hole and an outlet opening of the cooling hole, wherein a first plane extends through the airfoil, the first plane being parallel to the base plane and located a first radial distance RD1 from the base plane, the first radial distance RD1 being about 0.0445 meters, wherein a second plane extends through the airfoil, the second plane being parallel to the base plane and located a second radial distance RD2 from the base plane, the second radial distance RD2 being about 0.0559 meters, wherein a first perimeter line is defined by an intersection of the first plane and the exterior surface, wherein a second perimeter line is defined by an intersection of the second plane and the exterior surface, wherein a first line is defined by a first point on the first perimeter line on the exterior surface and a second point on the second perimeter line on the exterior surface and extending between the root and the tip of the airfoil, wherein a second line is defined a third point on the first perimeter line on the exterior surface and a fourth point on the second perimeter line on the exterior surface and extending between the root and the tip, wherein a third line is defined by a fifth point on the first perimeter line on the exterior surface and a sixth point on the second perimeter line on the exterior surface and extending between the root and the tip, wherein the first point corresponds to 19.6% along the first perimeter line on the exterior surface, the second point corresponds to 16.7% along the second perimeter line on the exterior surface, the third point corresponds to 30% along the first perimeter line on the exterior surface, the fourth point corresponds to 34% along the second perimeter line on the exterior surface, the fifth point corresponds to 60% along the first perimeter line on the exterior surface, and the sixth point corresponds to 60% along the second perimeter line on the exterior surface, wherein the percentages of the first, second, third, fourth, fifth, and sixth points are measured as starting at the trailing edge and increasing along the pressure side, the leading edge, and the suction side to the trailing edge of the airfoil, wherein a first zone is defined between the first perimeter line, the root, the first line, and the second line, wherein a sum of the metering areas of the cooling holes having outlet openings in the first zone defines a first zone metering area (MA1), wherein the first zone metering area (MA1) is 1.02E-06 to 1.46E-06 m², wherein a second zone is defined between the tip, the second perimeter line, the second line, and the third line, wherein a sum of the metering areas of the cooling holes having outlet openings in the second zone defines a second zone metering area (MA2), wherein the second zone metering area (MA2) is 1.24E-06 to 1.61E-06 m², wherein a third zone is defined between the tip, the second perimeter line, the third line, and the trailing edge, wherein a sum of the metering areas of the cooling holes having outlet openings in the third zone defines a third zone metering area (MA3), wherein the third zone metering area (MA3) is 0 to 1.46E-07 m², and wherein, $6038.072 \leq \left(\frac{100 ∗ {\left(\frac{MA 1 \left({m}^{2}\right)}{0.005 {m}^{2}}\right)}^{- 2} ∗ \left(\frac{MA 2 \left({m}^{2}\right)}{0.1 {m}^{2}}+\frac{MA 3 \left({m}^{2}\right)}{0.107 {m}^{2}}\right)}{\left(0.2∗\left(\frac{Redline CS \left(Hz\right)}{329 Hz}\right)∗{\left(\frac{Redline EGT \left(°C\right)}{500 ° C}\right)}^{3}\right)}\right. \leq 29238.554 .$

The blade assembly of any preceding clause, wherein the first perimeter line, the second perimeter line, the first line, the second line, and the third line divide the exterior surface of the airfoil into twelve zones.

The blade assembly of any preceding clause, wherein at least one of the zones does not contain any cooling holes.

The blade assembly of any preceding clause, wherein at least one of the cooling holes has an area that changes between the inlet opening and the outlet opening of the corresponding cooling hole.

The blade assembly of any preceding clause, wherein at least one of the cooling holes has an area that is constant between the inlet opening and the outlet opening of the corresponding cooling hole.

The blade assembly of any preceding clause, wherein the airfoil has a plurality of internal cooling conduits, and wherein each of the cooling holes is fluidly coupled to one of the plurality of internal cooling conduits.

The blade assembly of any preceding clause, wherein the shank has a plurality of inlet passages fluidly coupled to the plurality of internal cooling conduits in the airfoil.

The blade assembly of any preceding clause, wherein the blade assembly is a stage one blade assembly of a high-pressure turbine of the turbine section.

A gas turbine engine comprising: a turbomachine, the turbomachine including: a compressor section; a combustor; and a turbine section, the turbine section including the blade assembly of any preceding clause.

## Claims

1. A blade assembly (300) for a gas turbine engine (100) having a turbomachine (102) configured to generate a redline exhaust gas temperature (EGT) in a range of 988 degrees Celsius (°C) to 1120°C and having a redline core speed (CS) in a range of 306 Hertz to 353 Hertz, the blade assembly (300) to be mounted to a disk (200) of a turbine section (119) and rotatable about a centerline axis (108) of the gas turbine engine (100), the blade assembly (300) comprising:
a platform (304) having an upper surface (336) and a lower surface (338);
a shank (302) coupled to the lower surface (338), the shank (302) having a base (308) defining a base plane; and
an airfoil (306) having:
an outer wall (322) defining an exterior surface (324), the exterior surface (324) defining a pressure side (326) and a suction side (328);
a leading edge (330) and a trailing edge (332); and
a root (318) and a tip (320), the airfoil (306) coupled to the upper surface (336) at the root (318),
wherein one or more internal cooling conduits (700a-700e) are defined in the airfoil (306),
wherein a plurality of cooling holes (334) are defined in the outer wall (322) that extend between the exterior surface (324) and the one or more internal cooling conduits (700a-700e),
wherein each of the cooling holes (334) defines a metering area that is a minimum area of the cooling hole (334) between an inlet opening (800) of the cooling hole and an outlet opening (802) of the cooling hole,
wherein a first plane (500) extends through the airfoil (306), the first plane (500) being parallel to the base plane and located a first radial distance RD1 from the base plane, the first radial distance RD1 being about 0.0445 meters,
wherein a second plane (502) extends through the airfoil (306), the second plane (500) being parallel to the base plane and located a second radial distance RD2 from the base plane, the second radial distance RD2 being about 0.0559 meters,
wherein a first perimeter line (364) is defined by an intersection of the first plane (500) and the exterior surface (324),
wherein a second perimeter line (366) is defined by an intersection of the second plane (502) and the exterior surface (324),
wherein a first line (368) is defined by a first point (374a) on the first perimeter line (364) on the exterior surface (324) and a second point (374b) on the second perimeter line (366) on the exterior surface (324) and extending between the root (318) and the tip (320) of the airfoil (306),
wherein a second line (370) is defined a third point (370) on the first perimeter line (364) on the exterior surface (324) and a fourth point (374d) on the second perimeter line (366) on the exterior surface (324) and extending between the root (318) and the tip (320),
wherein a third line (372) is defined by fifth point (374e) on the first perimeter line (364) on the exterior surface (324) and a sixth point (374f) on the second perimeter line (366) on the exterior surface (324) and extending between the root (318) and the tip (320),
wherein the first point (374a) corresponds to 19.6% along the first perimeter line (364) on the exterior surface (324), the second point (374b) corresponds to 16.7% along the second perimeter line (366) on the exterior surface (324), the third point (374c) corresponds to 30% along the first perimeter line (364) on the exterior surface (324), the fourth point (374d) corresponds to 34% along the second perimeter line (366) on the exterior surface (324), the fifth point (374e) corresponds to 60% along the first perimeter line (364) on the exterior surface (324), and the sixth point (374f) corresponds to 60% along the second perimeter line (366) on the exterior surface (324), wherein the percentages of the first, second, third, fourth, fifth, and sixth points (374a-374e) are measured as starting at the trailing edge (332) and increasing along the pressure side (326), the leading edge (330), and the suction side (328) to the trailing edge (332) of the airfoil (306),
wherein a first zone is defined between the first perimeter line (364), the root (318), the first line (368), and the second line (370), wherein a sum of the metering areas of the cooling holes (334) having outlet openings in the first zone defines a first zone metering area (MA1), wherein the first zone metering area (MA1) is 1.02E-06 to 1.46E-06 m²,
wherein a second zone is defined between the tip (320), the second perimeter line (366), the second line (370), and the third line (372), wherein a sum of the metering areas of the cooling holes (334) having outlet openings in the second zone defines a second zone metering area (MA2), wherein the second zone metering area (MA2) is 1.24E-06 to 1.61E-06 m²,
wherein a third zone is defined between the tip (320), the second perimeter line (366), the third line (372), and the trailing edge (332), wherein a sum of the metering areas of the cooling holes (334) having outlet openings in the third zone defines a third zone metering area (MA3), wherein the third zone metering area (MA3) is 0 to 1.46E-07 m², and
wherein, $6038.072 \leq \left(\frac{100 ∗ {\left(\frac{MA 1 \left({m}^{2}\right)}{0.005 {m}^{2}}\right)}^{- 2} ∗ \left(\frac{MA 2 \left({m}^{2}\right)}{0.1 {m}^{2}}+\frac{MA 3 \left({m}^{2}\right)}{0.107 {m}^{2}}\right)}{\left(0.2∗\left(\frac{Redline CS \left(Hz\right)}{329 Hz}\right)∗{\left(\frac{Redline EGT \left(°C\right)}{500 ° C}\right)}^{3}\right)}\right. \leq 29238.554 .$

2. The blade assembly (300) of claim 1, wherein the first perimeter line (364), the second perimeter line (366), the first line (368), the second line (370), and the third line (372) divide the exterior surface (324) of the airfoil (306) into twelve zones.

3. The blade assembly (300) of claim 2, wherein at least one of the zones does not contain any cooling holes.

4. The blade assembly (300) of any of claims 1-3, wherein at least one of the cooling holes (334) has an area that changes between the inlet opening (800) and the outlet opening (802) of the corresponding cooling hole.

5. The blade assembly (300) of any of claims 1-3, wherein at least one of the cooling holes (334) has an area that is constant between the inlet opening (800) and the outlet opening (802) of the corresponding cooling hole.

6. The blade assembly (300) of any of claims 1-5, wherein the airfoil (306) has a plurality of internal cooling conduits (700a-700e), and wherein each of the cooling holes (334) is fluidly coupled to one of the plurality of internal cooling conduits (700a-700e).

7. The blade assembly (300) of claim 6, wherein the shank (308) has a plurality of inlet passages (316a-316c) fluidly coupled to the plurality of internal cooling conduits (700a-700e) in the airfoil (306).

8. The blade assembly (300) of any of claims 1-7, wherein the blade assembly (300) is a stage one blade assembly of a high-pressure turbine (120) of the turbine section (119).

9. A gas turbine engine (100), comprising:
a turbomachine (102), the turbomachine (102) including:
a compressor section (113);
a combustor (118); and
a turbine section (119), the turbine section (119) including the blade assembly (300) of any of claims 1-8.
